Europäisches Patentamt

European Patent Office

Office européen des brevets

(19)

(11) Veröffentlichungsnummer: **0 658 015 A1**

(12) **EUROPÄISCHE PATENTANMELDUNG**

(21) Anmeldenummer: **94118938.3**

(22) Anmeldetag: **01.12.94**

(51) Int. Cl.⁶: **H04B 10/155**

(30) Priorität: **07.12.93 CH 3642/93**

(43) Veröffentlichungstag der Anmeldung:
**14.06.95 Patentblatt 95/24**

(84) Benannte Vertragsstaaten:
**CH DE FR GB LI SE**

(71) Anmelder: **ASCOM TECH AG**
**Berner Technopark,**
**Morgenstrasse 129**
**CH-3018 Bern (CH)**

(72) Erfinder: **Wang, Yu, Dr.**
**Rue du Simplon 8**
**CH-1700 Fribourg (CH)**

(74) Vertreter: **Schwerdtel, Eberhard, Dr.**
**Ascom Tech AG**
**Gewerblicher Rechtsschutz**
**Berner Technopark**
**Morgenstrasse 129**
**CH-3018 Bern (CH)**

(54) **Vorrichtung zum Aussenden eines intensitäts- und phasenmodulierten Lichtstrahls.**

(57) Es wird ein optoelektrisch arbeitender Modulator (20) beschrieben, der zum Ansteuern eines direkt modulierten Lasers im GigaHertzbereich dient.

Der Modulator (20) umfasst einen Laser (51) einen Strahlteiler (52), zwei Modulatoren (54, 55), einen optischen (59) und einen elektrischen 90-Grad-Hybrid (60), zwei Fotodioden (65, 66) und zwei Verstärker (75, 76). Der Strahlteiler (52) teilt den vom Laser (51) ausgehenden ersten Lichtstrahl (S1) in zwei Teilstrahlen (S2, S3) gleicher Intensität. Diese Teilstrahlen werden im ersten Modulator (55) durch ein Hilfsträgersignal (TS) intensitätsmoduliert bzw. im zweiten Modulator (54) durch ein Nutzsignal (NS) phasenmoduliert. Die resultierenden Teilstrahlen (S4, S5) werden im optischen 90-Grad-Hybrid (59) gemischt, die abgehenden Lichtstrahlen (S6, S7) durch die Fotodioden (65, 66) und die nachgeschalteten Verstärker (75, 76) in elektrische Ströme ($i_1$, $i_2$) umgewandelt und diese im elektrischen 90-Grad-Hybrid (60) ebenfalls gemischt. Es ergibt sich hierdurch am Ausgang (23) ein zeitvarianter Strom (i), dessen Hilfsträger phasenmoduliert ist.

Der Modulator (20) ist als integrierter, optoelektrischer Baustein realisierbar.

Fig. 2

Die Erfindung betrifft eine Vorrichtung mit einem Sender zum Aussenden eines intensitäts- und phasenmodulierten Lichtstrahls, wobei die Intensitätsmodulation durch ein periodisches Hilfsträgersignal erfolgt, dessen Phasenwinkel in Abhängigkeit von der Amplitude eines Nutzsignals moduliert ist.

Eine Vorrichtung der genannten Art kann als Modulator angesehen werden, der zum Steuern eines Strahlsenders dient. Unter einem Strahlsender ist dabei allgemein jeder Sender zu verstehen, der elektromagnetische Wellen in gebündelter Form aussendet, z.B. zum Speisen einer Koaxialleitung. Im speziellen ist unter einem Strahlsender jedoch vor allem ein Laser zu verstehen, der einen Lichtstrahl aussendet. Dieser Lichtstrahl kann in einem Lichtleiter geführt sein und zur Übertragung von Information dienen.

Zur Informationsübertragung ist es notwendig, den vom Strahlsender ausgesandten Strahl zu modulieren. Bei Lasern kann die Modulation bevorzugt dadurch erfolgen, dass durch Variation des Laserstromes die Intensität des ausgesandten Strahles verändert wird, was einer speziellen Art von Amplitudenmodulation entspricht. Den Vorteilen dieser einfachen Modulationsart steht jedoch ein relativ schlechtes Signal/Rausch-Verhältnis gegenüber.

Die Modulation des Phasenwinkels eines periodischen Trägersignals verhält sich bezüglich des Signal/Rausch-Verhältnisses wesentlich besser als die Amplitudenmodulation, wenn gewisse Bedingungen erfüllt sind wie z.B.geeignete Form des Trägersignals und an die Verhältnisse angepasste Grösse der Phasenamplitude. Für die Informationsübertragung auf Glasfaserstrecken wäre daher die Winkel- oder Phasenmodulation sehr interessant.

Andererseits ergeben sich bei der Modulation des Phasenwinkels eines sehr hochfrequenten Trägersignals, z.B. im Mikrowellenbereich mit einem breitbandigen Nutzsignal leicht Modulationsverzerrungen, die eine qualitativ ausreichende Übertragung des Nutzsignals verunmöglichen.

Hieraus ergibt sich die Aufgabe der Erfindung, eine Winkelmodulationseinrichtung für sehr hohe Trägerfrequenzen und sehr breitbandige Nutzsignale anzugeben, die linear arbeitet und die es gestattet, z.B. einen entsprechend modulierten Lichtstrahl auf eine Übertragungsstrecke auszusenden. Unter sehr hohe Frequenzen ist hierbei vor allem der GigaHertz-Bereich zu verstehen.

Die Lösung dieser Aufgabe ist durch den kennzeichnenden Teil des unabhängigen Anspruchs gegeben. Die abhängigen Ansprüche geben Einzelheiten und technische Ausgestaltungen an.

Im folgenden wird die Erfindung anhand von drei Figuren beispielsweise beschrieben. Die Figuren zeigen:

Fig. 1 - Blockschaltbild einer Sendeeinrichtung mit einem direkt gesteuerten Laser (Stand der Technik),

Fig. 2 - Blockschaltbild eines Modulators

Fig. 3 - Blockschaltbild eines optischen 90-Grad-Hybrids.

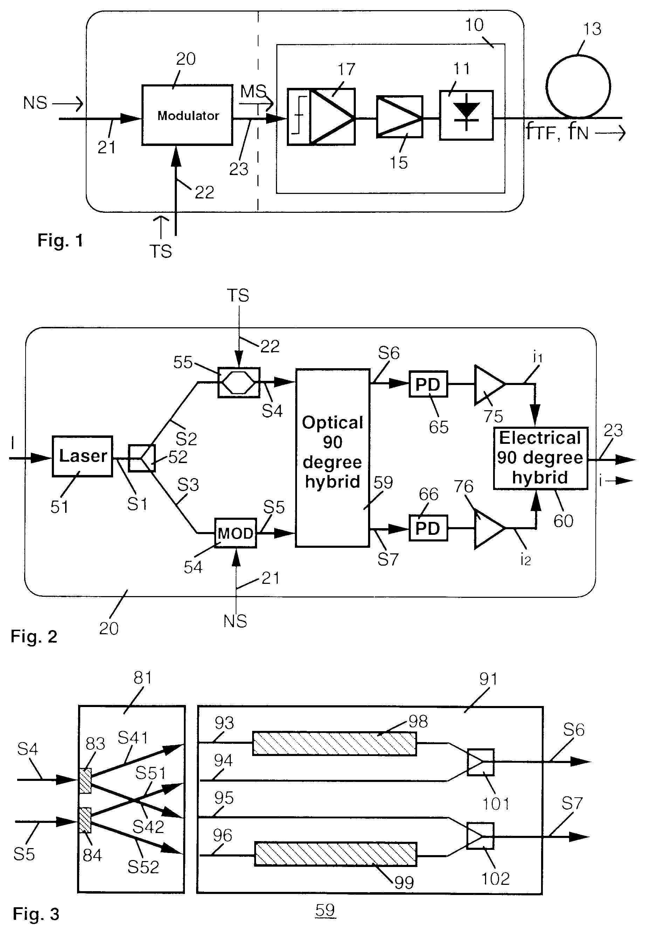

Fig. 1 zeigt als Stand der Technik ein grundsätzliches Blockschaltbild einer Modulationseinrichtung für einen direkt gesteuerten Lasersender. Diese Einrichtung umfasst einen Laser 11, beispielsweise einen Halbleiter-Leistungslaser für das zweite Fenster einer angeschlossenen, abgehenden Lichtleitfaser 13. Der Laser 11 wird durch eine Treiberstufe 15 angesteuert, die wiederum einem Amplitudenbegrenzer 17 nachgeschaltet ist. Die Einheiten 11, 15 und 17 bilden zusammen einen wohlbekannten optischen Sender 10 mit direkt moduliertem Laser. Der ausgesandte Lichtstrahl ist dabei wegen des Amplitudenbegrenzers 17 impulsförmig intensitätsmoduliert bzw. hart getastet (hard limited).

Zur Erzeugung der Modulation des vom Laser 11 ausgesandten Lichtstrahles dient ein dem optischen Sender 10 vorgeschalteter Modulator 20 mit einem Signaleingang 21 für das eigentliche Nutzsignal NS, mit einem Eingang 22 für ein periodisches Hilfsträgersignal TS und mit einem Signalausgang 23. An diesem Ausgang 23 wird das elektrische Modulationssignal MS ausgegeben, d.h. das periodische Hilfsträgersignal, bei dem die Signalphase durch das Nutzsignal NS moduliert ist. Im Idealfall besteht dabei ein streng linearer Zusammenhang zwischen der Amplitude des Nutzsignals NS und der Phasenauslenkung.

Fig. 2 zeigt den Aufbau des Modulators 20. Dieser Modulator umfasst einen Laser 51, z.B. einen Ein-Longitudinal-Mode- und Ein-Frequenz-Laser, einen Strahlteiler 52, einen ersten 55 und einen zweiten Lichtmodulator 54, einen optischen 59 und einen elektrischen 90-Grad-Hybrid 60 und zwei Fotodioden 65, 66 mit nachgeschalteten Verstärkern 75, 76. Diese Einheiten können zusammen einen integrierten optoelektronischen Baustein bilden.

Der Laser 51 gibt aufgrund eines elektrischen Steuerstromes I einen konstanten, ersten Lichtstrahl S1 ab. Die optische Frequenz dieses Strahles $S_1$ ist $\omega$. Der Strahlteiler 52 ist beispielsweise ein steuerbarer Richtkoppler, der den Strahl $S_1$ in einen zweiten $S_2$ und einen dritten Lichtstrahl $S_3$ etwa gleicher Intensität aufteilt bzw. aufsplittet. Der Strahlteiler 52 kann aber auch ein fest eingestellter Teiler sein, z.B. gebildet aus zwei miteinander verschweissten Fasern.

Der erste Modulator 55 ist ein Mach-Zehnder-Modulator, der die Intensität des zweiten Lichtstrahls $S_2$ mit einem periodischen Hilfsträgersignal TS der Frequenz $\omega_s$ moduliert. Die Verwendung von Mach-Zehnder-Modulatoren als Frequenztransformatoren ist an sich bekannt. Hierzu wird auf die Literaturstelle W. Stallard et al.: ⟨LiNbO$_3$ Optical

Frequency Translator for Coherent Optical Fiber Systems⟩, Integrated Optics, Proceedings ECIO' 85, Berlin, pp. 164-168, 1985 verwiesen. Der am Ausgang des Modulators 55 austretende vierte Lichtsrahl $S_4$ gehorcht der Formel

$$e_4 = E_4 \cos[(\omega - \omega_s)t] + E_4 \cos[(\omega + \omega_s)t]$$

Dies bedeutet eine Amplitudenmodulation der Lichtfrequenz $\omega$ mit zwei Seitenbändern. $\omega_s$ entspricht dabei der Frequenz des Hilfsträgersignals TS.

Der zweite Modulator 54 ist ein - ebenfalls an sich bekannter - Phasenmodulator für Licht, der den dritten Lichtstrahl $S_3$ mit einem Nutzsignal NS phasenmoduliert. Er arbeitet so, dass der an seinem Ausgang austretende fünfte Lichtstrahl $S_5$ der Formel

$$e_5 = E_5 \cos[\omega t + \phi(v(t))]$$

entspricht. Hierbei bildet $\phi(v(t))$ den Term, der die Phasenmodulation ausdrückt.

Der optische 90-Grad-Hybrid 59 ist eine Einheit, die beispielsweise aus der Publikation Y. Wang, W.R. Leeb, ⟨A 90° optical fiber hybrid for optimal signal power utilization⟩, Applied Optics, Vol. 26, page 4181, Oct. 1, 1987 bekannt ist. Diese Einheit vermischt die beiden an ihren Eingängen anliegenden vierten $S_4$ und fünften $S_5$ Lichtstrahlen und gibt an ihren Ausgängen einen sechsten $S_6$ und einen siebten $S_7$ Lichtstrahl ab. Diese beiden Lichtstrahlen $S_6$, $S_7$ entsprechen den Formeln

$$e_6 = e_4 + e_5 = E_4 \cos[(\omega - \omega_s)t] + E_4 \cos[(\omega + \omega_s)t] + E_5 \cos[\omega t + \phi(v(t))]$$

bzw.

$$e_7 = e_4 + e_5 \angle -90° = E_4 \cos[(\omega - \omega_s)t] + E_4 \cos[(\omega + \omega_s)t] + E_5 \sin[\omega t + \phi(v(t))].$$

Die beiden Fotodioden 65, 66 und die diesen nachgeschalteten Verstärker 75, 76 wandeln den sechsten $S_6$ bzw. den siebten $S_7$ Lichttrahl in zugeordnete Wechselströme $i_1$, $i_2$ um. Hierbei wirkt eine gewisse Filterung, die neben der Lichtfrequenz $\omega$ auch Terme mit dem Quadrat der Frequenz $\omega_s$ des Hilfsträgersignals TS eliminiert. Für die Wechselströme $i_1$, $i_2$ gelten damit folgende Beziehungen

$$i_1 = I_1 \cos[\omega_s t + \phi(v(t))] + I_1 \cos[\omega_s t - \phi(v(t))]$$

bzw.

$$i_2 = I_2 \cos[\omega_s t + \phi(v(t))] - I_2 \sin[\omega_s t - \phi(v(t))].$$

Der elektrische 90-Grad-Hybrid 60 arbeite im Grunde wie der optische Hybrid 59. Er vermischt die beiden Eingangsstöme $i_1$, $i_2$ und gibt an seinem Ausgang 23 das Modulationssignal MS ab, d.h. einen Strom i zum Ansteuern des genannten Senders 10. Das Modulationssignal MS bzw. dieser Strom i entspricht der Formel

$$i = i_1 + i_2 \angle +90° = 2\cos[\omega_s t + \phi(v(t))], \text{ sofern } I_1 = I_2.$$

Das Modulationssignal MS ist damit ein Wechselstrom, dessen Frequenz der Frequenz $\omega_s$ des Hilfsträgersignals TS entspricht, wobei diese Frequenz durch das Nutzsignal NS phasenmoduliert ist.

Der Modulator 20 arbeitet wie folgt: Der durch den Steuerstrom I gespeiste Laser 51 gibt den ersten Lichtstrahl $S_1$ mit einer Lichtfrequenz $f_1$ ab, die z.B. einer Lichtwellenlänge von 1300 nm entspricht. Dieser erste Lichtstrahl $S_1$ wird durch den Strahlteiler 52 in den zweiten $S_2$ und den dritten $S_3$ Lichtstrahl aufgesplittet, die etwa gleiche Intensität aufweisen. Der zweite Lichtstrahl $S_2$ durchläuft den ersten Lichtmodulator 55, der dritte Lichtstrahl $S_3$ den zweiten Lichtmodulator 54. Der zweite Lichtstrahl $S_2$ wird dabei mit dem Hilfsträgersignal TS intensitäts- bzw. amplitudenmoduliert und tritt als vierter Lichtstrahl $S_4$ aus dem Modulator 55 aus. Der dritte Lichtstrahl $S_3$ wird mit dem eigentlichen Nutzsignal NS phasenmoduliert und tritt als fünfter Lichtstrahl $S_5$ aus dem zweiten Modulator 54 aus. Der optische 90-Grad-Hybrid 59 vereinigt den vierten $S_4$ und den fünften Lichtstrahl $S_5$. Die vom Hybrid 59 abgegebenen, unterschiedlichen Strahlen $S_6$ und $S_7$ werden den Fotodioden 65 bzw. 66 zugeführt. Bis hierher arbeitet der Modulator 20 vorwiegend optisch. Die Verstärker 75, 76 und der elektrische 90-Grad-Hybrid 60 arbeiten dagegen elektronisch.

Die beschriebene Kombination des optischen 59 mit dem elektrischen 90-Grad-Hybrid 60 bildet einen wesentlichen Faktor des Modulators 20. Durch diese Kombination gelingt es nämlich, das eine der beiden Seitenbänder des intensitätsmodulierten Lichtstrahls $S_4$ zu eliminieren, so dass sich schlussendlich der beschriebene phasenmodulierte Strom i am Signalausgang 23 bilden kann.

Ein weiterer wichtiger Faktor ist darin zu sehen, dass der erste Lichtstrahl $S_1$ in den zweiten und dritten Lichtstrahl $S_2$, $S_3$ mit der genannten gleichen Intensität bzw. Lichtstärke aufgeteilt wird. Dies bewirkt bei der Strahlvereinigung im optischen 90-Grad-Hybrid 59 bzw. der Vereinigung der Ströme $i_1$, $i_2$ im elektrischen Hybrid 60 eine gegenseitige Intensitätskompensation.

Der Modulator 20 bildet eine optoelektrische Einheit mit ausschliesslich elektrischen Ein- 21, 22 und Ausgängen 23. Diese Ausführung des Modulators 20 erlaubt eine vollständige oder zumindest eine weitgehende optoelektronische Integration. Trotz seines relativ komplizierten Aufbaus ist der Modulator 20 daher als preiswerte Einheit herstellbar. Als sein Arbeitsbereich kommt vorwiegend der GigaHertz-Bereich infrage, als bevorzugtes Anwendungsgebiet die Ansteuerung von optischen Sendern 10.

Fig. 3 zeigt eine neue, vom bisher Bekannten abweichende Version eines optischen 90-Grad-Hybrids 59. Dieser Hybrid besteht aus zwei Bereichen 81, 91, von denen der eine 81 optisch brechende Elemente enthält, und der andere 91 als integrierter Optikschaltkreis ausgebildet ist. Der erste Bereich 81 umfasst zwei Strahlteiler 83, 84, denen der vierte $S_4$ bzw. der fünfte Lichtstrahl $S_5$ zugeführt wird. Jeder dieser Lichtstrahlen $S_4$, $S_5$ wird durch den jeweiligen, zugeordneten Strahlteiler 83 bzw. 84 in zwei in unterschiedliche Richtungen auseinanderlaufende Teillichtstrahlen $S_{41}$, $S_{42}$ bzw. $S_{51}$, $S_{52}$ aufgesplittet. Die Teillichtstrahlen koppeln in vier zugeordnete Lichtleiter 93, 95, 94 und/bzw. 96 des anderen Bereichs 91 ein. Dieser andere Bereich 91 umfasst zwei Phasenschieber 98, 99, die in die Lichtleiter 93 bzw. 96 eingefügt sind. Der Bereich 91 umfasst weiter zwei Strahlkoppler 101, 102, die die Lichtleiter 93 und 94 bzw. 95 und 96 miteinander koppeln. Die Strahlkoppler 101, 102 vereinigen damit die Teillichtstrahlen $S_{41}$ und $S_{51}$ bzw. $S_{42}$ und $S_{52}$. Die vereinigten Teillichtstrahlen treten dann als sechster $S_6$ bzw. siebter Lichtstrahl $S_7$ aus dem optischen 90-Grad-Hybrid 59 aus. Die Phasenschieber 98, 99 sind dabei so eingestellt, dass das wiedervereinigte Licht den genannten Formeln für $e_6 = (e_4 + e_5)$ bzw. $e_7 = (e_4 + e_5 \angle -90°)$ genügt.

Neben den erwähnten Varianten gibt es eine ganze Reihe anderer Möglichkeiten, unterschiedliche Ausgestaltungen der Erfindung anzugeben. Insbesondere ist der Aufbau der einzelnen Komponenten des Modulators 20 keinen wesentlichen Einschränkungen unterworfen und kann damit vom Fachmann weitgehend frei gewählt werden.

**Patentansprüche**

1. Vorrichtung mit einem Sender (10) zum Aussenden eines intensitäts- und phasenmodulierten Lichtstrahls,
   wobei die Intensitätsmodulation durch ein periodisches Hilfsträgersignal (TS) erfolgt, dessen Phasenwinkel in Abhängigkeit von der Amplitude eines Nutzsignals (NS) moduliert ist,
   gekennzeichnet,
   - durch einen Laser (51) zur Abgabe eines ersten Lichtstrahles ($S_1$),
   - durch einen Strahlteiler (52) zum Aufsplitten des ersten Lichtstrahles ($S_1$) in einen zweiten ($S_2$) und in einen dritten Lichtstrahl ($S_3$) etwa gleicher Intensität,
   - durch einen ersten Lichtmodulator (55) zum Intensitätsmodulieren des zweiten Lichtstrahls ($S_2$) mit dem Hilfsträgersignal (TS) und zur Abgabe eines vierten, modulierten Lichtstrahls ($S_4$),
   - durch einen zweiten Lichtmodulator (54) zum Phasenmodulieren der Lichtfrequenz ($\omega$) des dritten Lichtstrahls ($S_3$) mit dem Nutzsignal (NS) und zur Abgabe eines fünften, modulierten Lichtstrahls ($S_5$),
   - durch einen optischen 90-Grad-Hybrid (59) zum Zusammenfügen des modulierten vierten ($S_4$) und des fünften Lichtstrahls ($S_5$) und zur Abgabe eines sechsten ($S_6$) und eines hiervon verschiedenen siebten Lichtstrahls ($S_7$),
   - durch zwei Fotodioden (65, 66) zum Umwandeln des sechsten ($S_6$) bzw. des siebten ($S_7$) Lichtstrahls in zugeordnete Wechselströme ($i_1$, $i_2$), und
   - durch einen elektrischen 90-Grad-Hybrid (60) zum Zusammenfügen der Wechselströme ($i_1$, $i_2$) und zur Abgabe eines zeitvariablen, elektrischen Stromes (i) zum Ansteuern des Senders (10).

2. Vorrichtung nach Anspruch 1,
   dadurch gekennzeichnet,
   dass der ersten Lichtmodulator (55) ein Mach-Zehnder-Modulator ist.

3. Vorrichtung nach Anspruch 1,
   dadurch gekennzeichnet,
   - dass der optische 90-Grad-Hybrid (59) einen ersten Bereich (81) mit optisch brechenden Elementen und einen zweiten Bereich (91) umfasst, der als integrierter Optikschaltkreis ausgebildet ist,
   - dass der erste Bereich (81) zwei Strahlteiler (83, 84) aufweist, die die ankommenden Lichtstrahlen ($S_4$, $S_5$) in jeweils zwei Teillichtstrahlen ($S_{41}$, $S_{42}$ bzw. $S_{51}$, $S_{52}$) aufsplittet, und
   - dass der zweite Bereich (91) vier Lichtleiter (93, 95, 94, 96), zwei Phasenschieber (98, 99) und zwei Strahlkoppler (101, 102) aufweist, wobei die Phasenschieber (98, 99) in zwei der Lichtleiter (93, 96) eingefügt sind, und wobei die Strahlkoppler (101, 102) die Lichtleiter (93, 94 bzw. 95, 96) paarweise zusammenfassen.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-4 893 352 (WELFORD)<br>* Spalte 2, Zeile 1 - Zeile 25 *<br>* Zusammenfassung; Abbildungen 2,8 *<br>--- | 1-3 | H04B10/155 |
| A | PATENT ABSTRACTS OF JAPAN<br>vol. 7, no. 2 (P-166) 7. Januar 1983<br>& JP-A-57 163 217 (NIPPON DENKI)<br>* Zusammenfassung *<br>--- | 1-3 | |
| A | IEEE PHOTONICS TECHNOLOGY LETTERS,<br>Bd.5, Nr.6, Juni 1993, NEW YORK US<br>Seiten 725 - 728<br>R.F.KALMAN ET AL 'A Novel Analog Optical<br>Link with High Dynamic Range'<br>* Seite 725, linke Spalte, Absatz 2 -<br>rechte Spalte, Absatz 3; Abbildung 1 *<br>----- | 1,2 | |

**RECHERCHIERTE SACHGEBIETE (Int.Cl.6)**

H04B

Der vorliegende Recherchenbericht wurde für alle Patentansprüche erstellt

| Recherchenort | Abschlußdatum der Recherche | Prüfer |
|---|---|---|
| DEN HAAG | 21. Februar 1995 | Goudelis, M |

EPO FORM 1503 03.82 (P04C03)